# EUROPEAN PATENT SPECIFICATION

(11) **EP 1 318 585 B1**
(45) Date of publication and mention of the grant of the patent: **03.09.2008**
(21) Application number: 02027389.2
(22) Date of filing: 09.12.2002
(51) Int. Cl.: H02G 3/04, H02G 3/06

(54) **A joining clamp for a mesh cable tray and a connecting device comprising such a joining clamp**
Verbindungsklemme für Gitterkabelkanal und damit ausgerüstete Verbindungseinrichtung
Elément de connexion pour chemins de câble en fils et dispositif de connexion comportant un tel élément

(30) Priority: 10.12.2001 IT TO20011148
(43) Date of publication of application: 11.06.2003
(73) Proprietor: BTICINO S.P.A., 20154 Milano (IT)
(72) Inventor: Finco, Alan, 15047 Spinetta Marengo (Alessandria) (IT); Garassino, Luca, 15067 Novi Ligure (Alessandria) (IT)
(74) Representative: Rondano, Davide

(56) References cited:
- DE-A- 2 036 325
- US-A- 5 113 717

## Description

The present invention relates to a joining clamp for a mesh cable tray, as specified in the preamble of Claim 1.

In order to house and protect cables, in particular electric cables, it is known to use mesh trays, comprising a series of longitudinal wires and a series of transverse wires connected with each other to form a mesh, wherein each transverse wire includes a horizontal bottom segment and two vertical parallel segments extending perpendicular to the bottom segment so that the transverse wire is generally U-shaped.

Mesh cable trays are manufactured in sections of a given length, the opposite longitudinal ends of which are defined by respective transverse wires, hereafter referred to as end transverse wires or first transverse wires. In order to connect two separate, adjacent mesh tray sections, these are brought together longitudinally until their respective first transverse wires are close to each other and thus can be clipped together by joining devices, such as clamps, fitted to pairs of vertical and/or bottom segments of the two facing wires.

A joining clamp for connecting two separate, adjacent mesh cable tray sections is known, for example, from German patent application DE-20 36 325, in which is disclosed a clamp comprising two shaped plate elements, one of which forms a pair of seats for securing longitudinally the two transverse wires to be joined, whereas the other of which provides an abutment surface for transversely locking the two wires into the pair of seats. Threaded fixing members, such as bolts and nuts, are provided for securely fitting the two elements to each other.

A similar arrangement for a joining clamp is also known from Austrian patent AT-329 133.

A structural variant is also known from French patent application FR-2 656 961, which discloses a clamping device for a mesh cable tray comprising two plates each having a bottom flat portion the two opposite edges of which form folded flaps, complementary to each other and defining a seat for housing and securing the pair of wires to be joined. One of the two plates is provided also with a screw which passes through the above-mentioned seat, keeping the two wires apart, and protrudes from a hole in the opposite plate, thereby enabling the assembly to be secured by means of a nut.

Finally, European patent application EP-0 617 493 discloses a connecting device for a mesh cable tray, in which the two transverse wires to be joined are locked between a T-shaped bolt head and a plate with a rectangular bottom surface from a pair of opposite edges of which extend two flaps bent at a right angle. In this example as well, the assembly is secured by screwing a nut onto a portion of the bolt shank protruding from a hole provided in the bottom surface of the plate.

According to the above-discussed prior art, devices for connecting two mesh cable tray sections require to be locked by means of threaded connection members in order to secure the assembly. However, the use of threaded connection members makes assembling slower and more difficult.

It is therefore the object of the present invention to provide an improved joining clamp for a mesh cable tray with respect to the above-discussed prior art, and, in particular, a clamp which enables simple and quick assembling without requiring screwing up.

This object is fully achieved according to the invention by virtue of a joining clamp having the characteristics defined in independent Claim 1.

A further object of the invention is to provide a connecting device for a mesh cable tray which enables simple and quick assembling without requiring screwing up and assures a strong connection and an accurate alignment of the two tray sections to be connected.

This further object is fully achieved by virtue of a connecting device as defined in independent Claim 15.

To sum up, the present invention is based on the idea of providing a joining clamp which comprises two metal plate elements adapted to define, when assembled, a pair of seats for receiving and securing the facing transverse wires of two mesh tray sections to be connected, wherein the two elements are provided in pre-assembled arrangement and can be securely fitted to each other by snap-engaging means.

This solution offers clearly the advantage of enabling simple and quick assembling, since the two plate elements of the clamp can be fitted to each other to secure the two facing transverse wires to be joined simply by being pressed lightly against each other. This operation can be easily performed with one hand, either by using two fingers or with the help of pliers.

Further characteristics and advantages of the invention will be explained in greater detail in the following description, given purely by way of non-limitative example, with reference to the appended drawings, in which

Figure 1 is a perspective view from above of a joining clamp according to a first embodiment of the present invention, in its initial, pre-assembled condition for preliminarily connection of a pair of vertical segments of the facing end transverse wires of two adjacent mesh tray sections to be connected;

Figure 2 is a perspective view from above of the joining clamp of Figure 1, in its final, assembled condition for secure connection of the two adjacent mesh tray sections;

Figure 3 is a perspective view from above of a structural variant of a joining clamp according to the present invention, in its pre-assembled condition;

Figure 4 is a perspective view from above of the joining clamp of Figure 3, in its assembled condition;

Figure 5 is a perspective view from below of a further structural variant of a joining clamp according to the present invention, in its pre-assembled condition;

Figure 6 is a perspective view from above of the joining clamp of Figure 5, in its assembled condition;

Figure 7 is a plan view of one of the two elements forming the joining clamp of Figures 5 and 6, showing in detail the outline of a pair of notches for engaging the two transverse wires to be connected;

Figure 8 is a perspective view of a first embodiment of a connecting device for mesh cable trays according to the invention, in its pre-assembled condition;

Figure 9 is a perspective view from above of the connecting device of Figure 8, in its assembled condition;

Figure 10 is a perspective view of a further embodiment of a connecting device for mesh cable trays according to the invention, in its pre-assembled condition.

With reference to the drawings, longitudinally adjacent first and second sections of a mesh cable tray are generally indicated 1 and 2, and include each a series of longitudinal metal wires 3 and a series of transverse metal wires 5 (of which only the end wire is illustrated), connected with each other to form a mesh. Each transverse wire 5 includes a typically straight bottom segment 6 and a pair of vertical parallel segments 7 extending perpendicular to the bottom segment, so that the transverse wire is generally U-shaped.

In order to securely connect the two mesh tray sections 1 and 2, a plurality of joining clamps 10 (of which only one is shown) clip the two end transverse wires 5 of these sections together. At least two clamps are arranged to secure the facing vertical segments 7 of the two end transverse wires 5, while one or more clamps can also be arranged, if necessary, to secure the bottom segments 6 of these wires in order to provide a further constraint against relative rotation of the two tray sections.

Each clamp 10 comprises first and second elements, indicated 11 and 12, respectively, manufactured by blanking and forming a metal sheet. The first element 11 forms, by co-operating, if necessary, with the second element 12, a pair of seats for receiving and securing longitudinally, at a predetermined distance from each other, the pairs of facing segments 6 and 7 of the two transverse wires 5 to be connected.

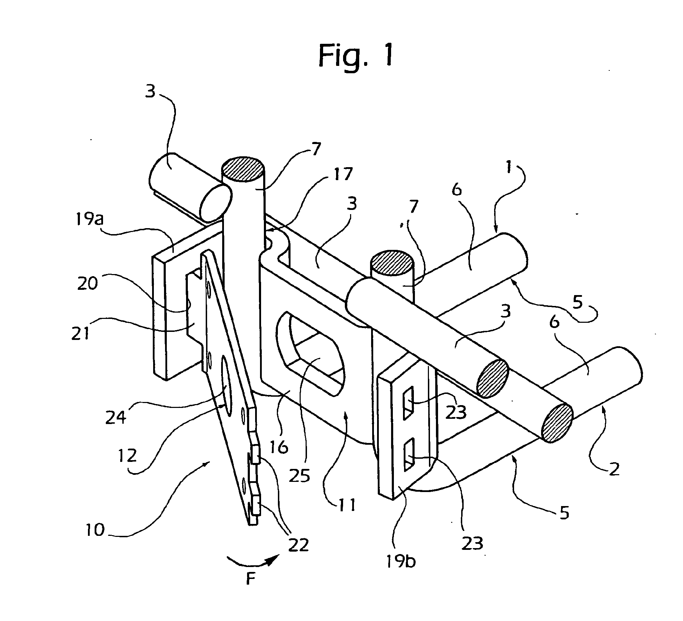

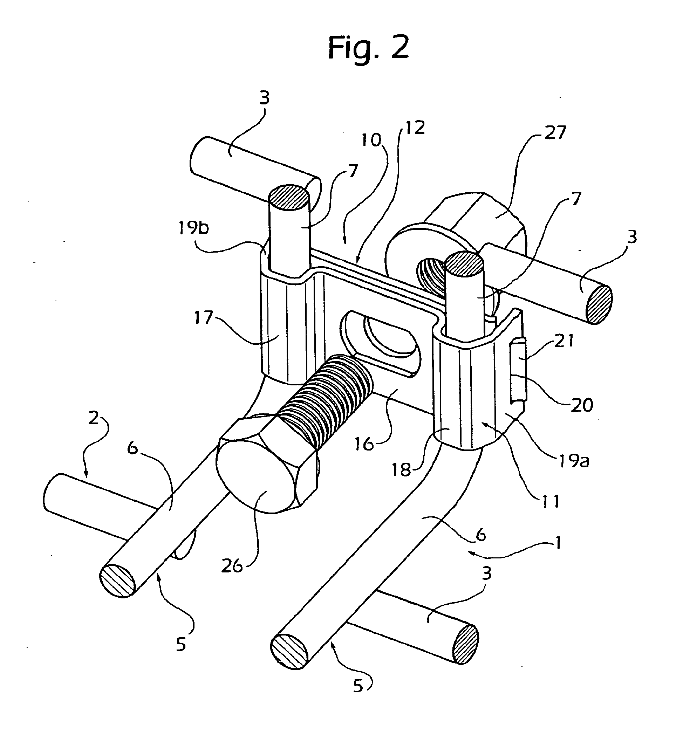

With the joining clamp 10 in an initial, pre-assembled condition (shown in Figures 1, 3 and 5), the second element 12 can be rotated to the element 11 about an axis essentially parallel to the wire segment to be clamped, in order to allow the two transverse wires 5 to be inserted into their seats. In a final, assembled condition (shown in Figures 2, 4 and 6), on the other hand, the second element 12 is locked to the first by snap-engaging means in order to securely clamp the two transverse wires 5.

With reference now to Figures 1 and 2, in which there is illustrated a first embodiment of a joining clamp according to the invention, the first element 11 comprises a central portion 16 formed as a rectangular flat plate, arranged in use in a plane essentially parallel to the wire segment to be clamped. The central portion 16 forms integrally two channel portions 17, which extend from two opposite edges of the portion 16 and define the seats for receiving the two transverse-wire segments 6, 7 (in the illustrated example, the vertical segments 7).

Each channel portion 17 comprises a bottom 18, essentially parallel to the plate portion 16, joined by its inner edge to the portion 16 and by its outer edge to a respective side portion 19a, 19b in the shape of a rectangular plate extending essentially perpendicular to the central portion 16.

The second element 12 is a substantially rectangular, flat plate such that with the clamp 10 in its assembled condition (Figure 2) the element 12 can be interposed between the side portions 19a, 19b of the first element 11 in facing, parallel relationship with the central portion 16 of the first element 11.

The side portion 19a of the first element 11 has a rectangular slot 20, essentially parallel to the wire segment to be clamped, into which can be inserted a tongue 21 projecting horizontally from the second element 12 and bent at an angle to this latter. As shown in Figure 1, by inserting the tongue 21 of the second element 12 into the slot 20 in the first element 11, it is possible to provide the clamp 10 in a pre-assembled condition in which the two elements are coupled together in such a way that they can rotate relative to each other about an axis corresponding approximately to the axis of the slot 20, that is, essentially parallel to the wire segments to be clamped. With the clamp in this condition, the end transverse wires 5 of the two tray sections 1 and 2 to be connected can be received into their seats 17 in the first element 11.

At this point, in order to secure the assembly, the second element 12 is turned in the direction of the arrow F until it snap-engages the side portion 19b of the first element 11. To this end, the side edge of the element 12 opposite that forming the tongue 21 has a pair of laterally projecting teeth 22 (only shown in Figure 1) which insert into corresponding slots 23 provided in the side portion 19b. In the assembled condition (Figure 2) the two transverse wires 5 are thus locked by the element 12 in the respective seats formed by the channel portions 17.

Advantageously, the joining clamp 10 can be securely held in the assembled condition described above also by fastening together the two elements 11 and 12 by means of threaded fixing members. To this end, the second element 12 has a central hole 24 and the central portion 16 of the first element 11 has a slot 25 aligned with the hole 24, so that with the clamp 10 in its assembled condition (Figure 2) a bolt 26 can be passed through the hole 24 and the slot 25 to be secured by a nut 27.

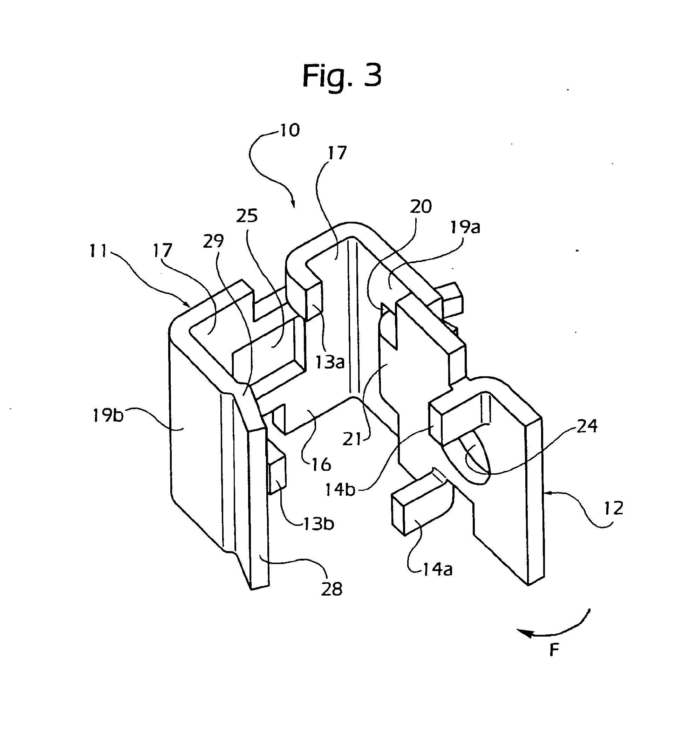

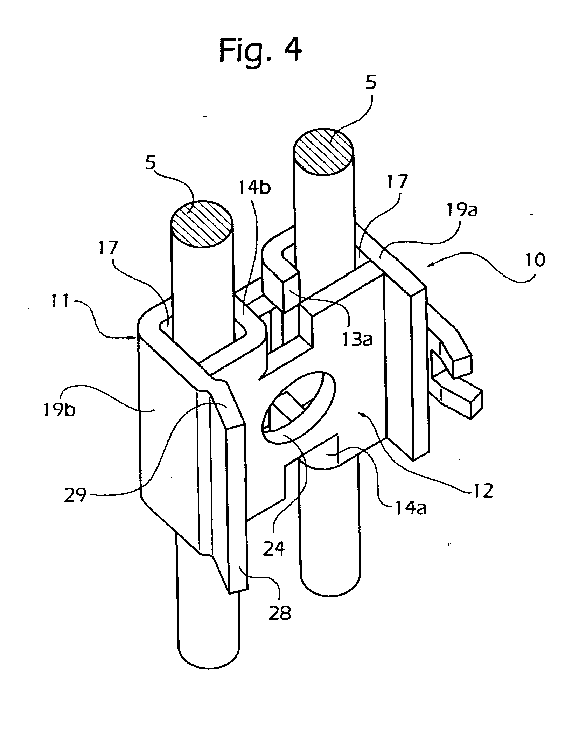

A structural variant of a joining clamp according to the present invention is illustrated in Figures 3 and 4, in which elements or components identical or functionally equivalent to those illustrated in Figures 1 and 2 have been given the same reference numbers.

According to this variant, the first element 11 includes a bottom central portion 16, in the shape of a substantially rectangular plate, with two side plate portions 19a and 19b extending essentially perpendicular thereto. As in the example discussed above, advantageously the bottom portion 16 has a central opening 25 which, once the clamp is assembled, is aligned with an opening 24 in the second element 12 to allow the insertion of a fixing bolt (not shown).

In addition, a pair of upper and lower projections 13a and 13b, respectively, protrude at right angles from the portion 16 in the same direction as the side portions 19a and 19b of the first element 11, in order to form the seats for receiving the two transverse wires 5. The two projections 13a and 13b are formed by blanking and bending respective portions of the metal sheet forming the bottom portion 16 on opposite sides with respect to a plane through the centre of the portion 16, so as to co-operate with the side portions 19a and 19b to secure longitudinally the transverse wires 5.

In the same way, also the second element 12 of the joining clamp 10 which, as in the embodiment described above, is formed as a flat rectangular plate, has a pair of lower and upper projections 14a and 14b, respectively, which protrude at right angles from the element 12 on opposite sides with respect to a plane through the centre of this element, so that in the assembled condition (Figure 4) they are aligned with the projections 13a and 13b, respectively. In the assembled condition, therefore, each segment of transverse wire 5 is secured in a seat 17 defined on the outside by a respective side portion 19a, 19b of the first element 11 and on the inside by a pair of upper and lower projections 13a, 14a and 13b, 14b, respectively.

The second element 12 has an extension 21, projecting laterally from the plate portion and bent substantially at a right angle thereto, for engaging a vertical slit 20 in the side portion 19a of the first element 11 in order to enable the two elements of the clamp to be pre-assembled in such a way that they can be rotated relative to each other about an axis essentially parallel to the wire segments to be clamped (as indicated by the arrow F).

In this case, the two elements 11 and 12 can be snap-engaged by virtue of the side portion 19b of the first element 11 comprising an extension 28, slightly inclined outwardly and joined to the portion 19b through a bent portion 29 forming a step. In this way, when the second element 12 is rotated in the direction of the arrow F to be clamped on the first element 11, the end edge of the element 12 opposite the end articulated to the element 11 slides along a ramp formed by the extension 28 of the side portion 19b until it snaps resiliently past the step 29 and is thus locked into its assembled condition (Figure 2).

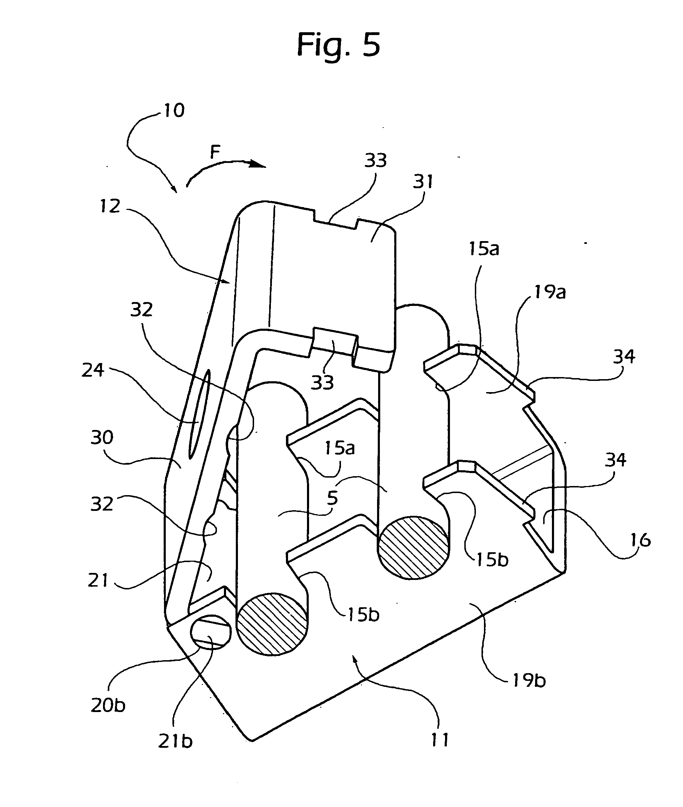

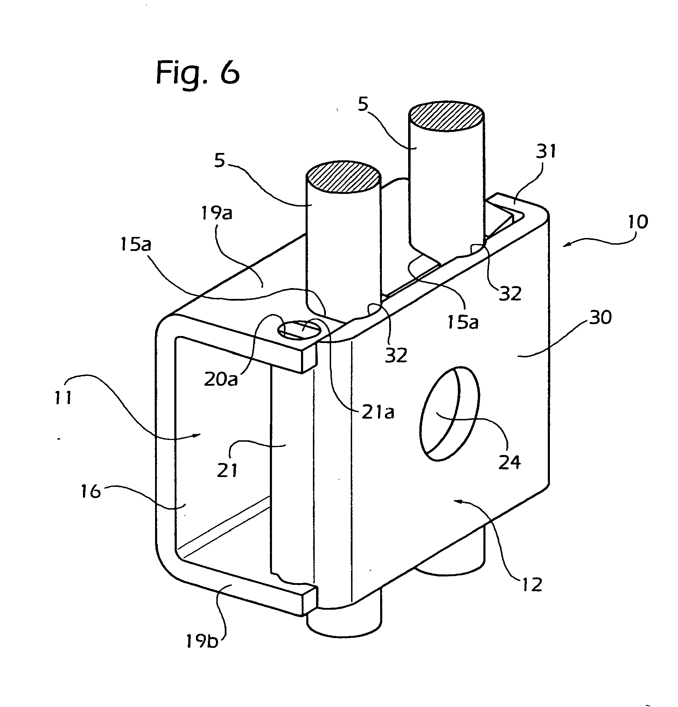

A further structural variant of a joining clamp according to the present invention is illustrated in Figures 5 and 6, in which elements or components identical or functionally equivalent to those illustrated in Figures 1 to 4 have been given the same reference numbers.

According to this further variant, the first element 11 of the clamp comprises a bottom central portion 16 formed as a flat rectangular plate and two opposed, substantially symmetrical, flat portions 19a and 19b, respectively, extending transversely from opposite edges of the central portion 16.

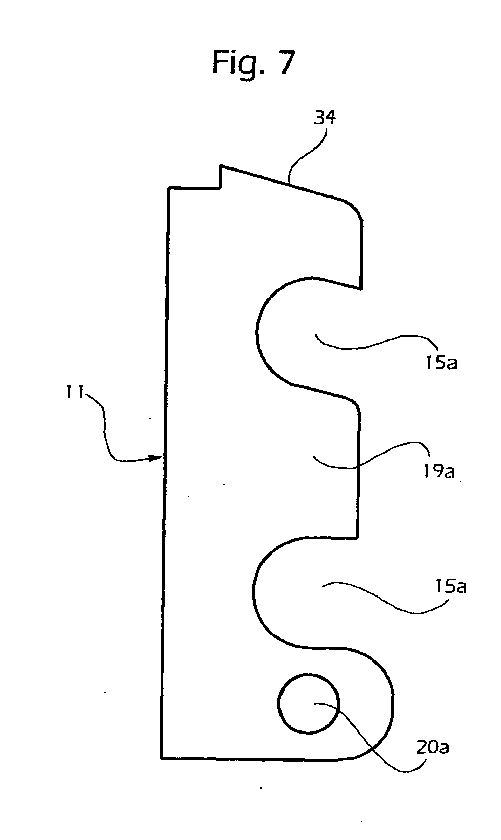

The outer edges of the two opposed portions 19a and 19b of the first element 11 have respective pairs of notches 15a and 15b, open outwards and aligned in pairs for receiving the facing segments of the end transverse wires 5 of the two tray sections to be connected. The transverse size of the notches 15a, 15b is only slightly greater than the diameter of the wires 5, so as to lock them transversely, whereas their depth is advantageously smaller, so that a portion of the wires protrudes from the notches 15a, 15b to be engaged by the second element 12, as will be better explained in the following part of the description. As better illustrated in Figure 7, the outline of the notches 15a, 15b is preferably formed by two straight parallel sides joined by a semicircular bottom portion.

Two aligned holes 20a and 20b are also provided in the two opposed portions 19a and 19b of the first element 11, for engagement by respective pins 21a and 21b for articulation of the second element 12.

The second element 12 comprises a rectangular, flat, central portion 30, the sizes of which are substantially the same as those of the bottom portion 16 of the first element 11. In the inner surface of the portion 30, that is, the surface facing the first element 11, there is formed a pair of cylindrical grooves, indicated 32, which in the assembled condition (Figure 6) lock the transverse wires 5 into the seats formed by the notches 15a and 15b in the first element 11.

A flap 21 integral with the central portion 30 of the second element 12 and arranged to be inserted between the two opposed portions 19a and 19b of the first element 11 extends from one of the two opposite edges of the portion 30 essentially parallel to the wire segments to be clamped. The flap 21 forms an upper pin 21a and a lower pin 21b which, when engaged in the holes 20a and 20b, respectively, provided in the portions 19a and 19b of the first element 11, enable the two elements of the clamp 11, 12 to rotate relative to each other about an axis essentially parallel to the wire segments to be clamped. From the opposite edge of the central portion 30, on the other hand, extends a side portion 31, the two opposite edges of which facing the opposed portions 19a and 19b of the first element 11 form a pair of aligned seats 33 for snap-engagement by corresponding catch members 34 provided by the portions 19a, 19b.

The catch members 34 are shaped as teeth, with a ramp profile starting from the free end of the respective portion 19a, 19b of the second element 12 and ending in a step. In this way, when the second element 12 is rotated in the direction of the arrow F to be secured to the first element 11, the side portion 31 of the element 12 moves up along the two ramps formed by the catch members 34 until the seats 33 cross those ramps and pass resiliently beyond the step-like flanks of the members 34, thus remaining locked in the assembled condition (Figure 6).

As in the embodiments illustrated before, also in this case it is possible, although not compulsory, to secure the connection between the two elements 11 and 12 of the joining clamp 10 by threaded fixing means. This may be achieved either by using a bolt and nut or by screwing a screw into a threaded hole 25 provided in the bottom portion 16 of the first element 11.

Advantageously, the two straight parallel sides of the two notches 15a and 15b furthest from the axis of articulation of the elements 11 and 12 are not perpendicular to the bottom central portion 16 of the first element 11, but are slightly inclined to the perpendicular (Figure 7). This arrangement offers the advantage of greater safety against accidental disassembling of the clamp. In fact, even in case of failure of the snap-engagement between the two elements 11 and 12 of the clamp, the first element 11 cannot come loose from the two transverse wires 5 simply as a result of transverse movement, just by virtue of one of the two notches 15a being not orientated exactly transversely. In particular, since this notch is inclined away from the other, in order to disengage the wire received therein it is necessary to bring the two end transverse wires 5 of the two tray sections 1 and 2 longitudinally nearer each other.

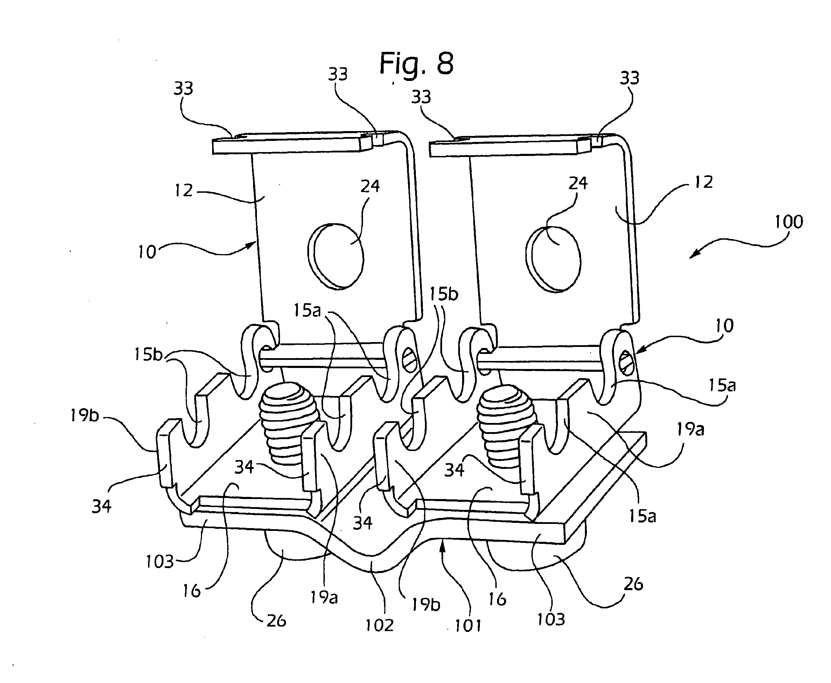

A joining clamp according to the invention can be advantageously used to provide a connecting device for mesh cable trays, as shown in Figures 8 to 10.

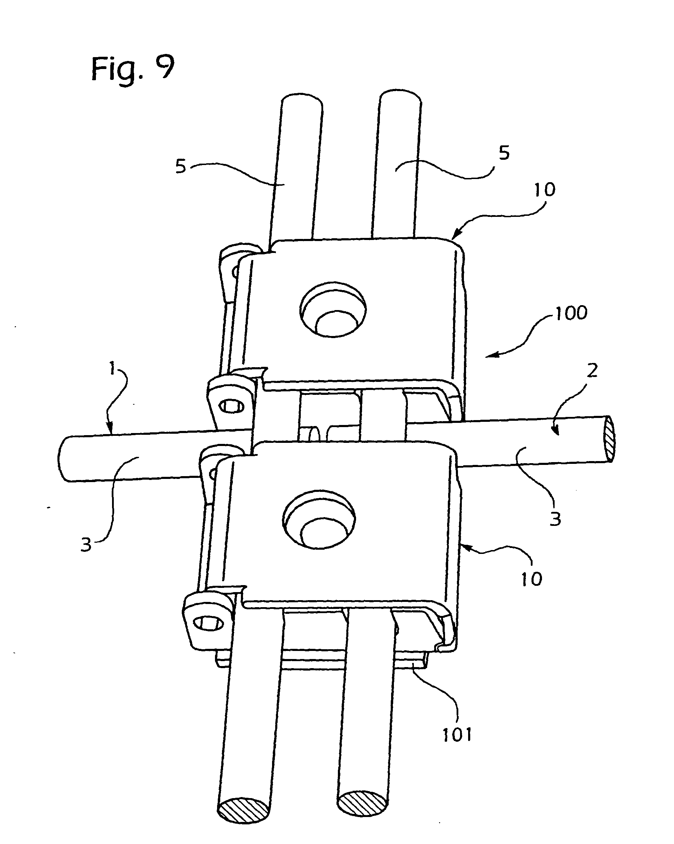

A first embodiment of such a connecting device is illustrated in Figures 8 and 9, where parts and elements identical or functionally equivalent to those illustrated in the preceding figures have been indicated by the same reference numbers.

With reference to Figures 8 and 9, a connecting device according to the invention is generally indicated 100 and comprises basically a plate element 101 and a pair of joining clamps 10 of the same type as those described before (for example, that illustrated in Figures 5 and 6) fixed to the plate element 101. The plate element 101 forms a pair of flat side portions 103 for fixing the clamps 10 thereto and a recessed central portion 102 for engaging the end portions of a pair of essentially aligned, longitudinal wires 3 of the two mesh cable tray sections 1, 2 to be connected. The two clamps 10 are arranged to secure the bottom segments 6 (as shown in Figure 9) or the vertical segments 7 of the end transverse wires 5 of the two mesh tray sections to be connected. The clamps 10 are attached on the flat side portions 103 of the plate element 101, for example, by welding or screw-fixing. In the latter case, it is possible to use the same bolts 26 as those provided for securing together the two elements 11 and 12 of each clamp.

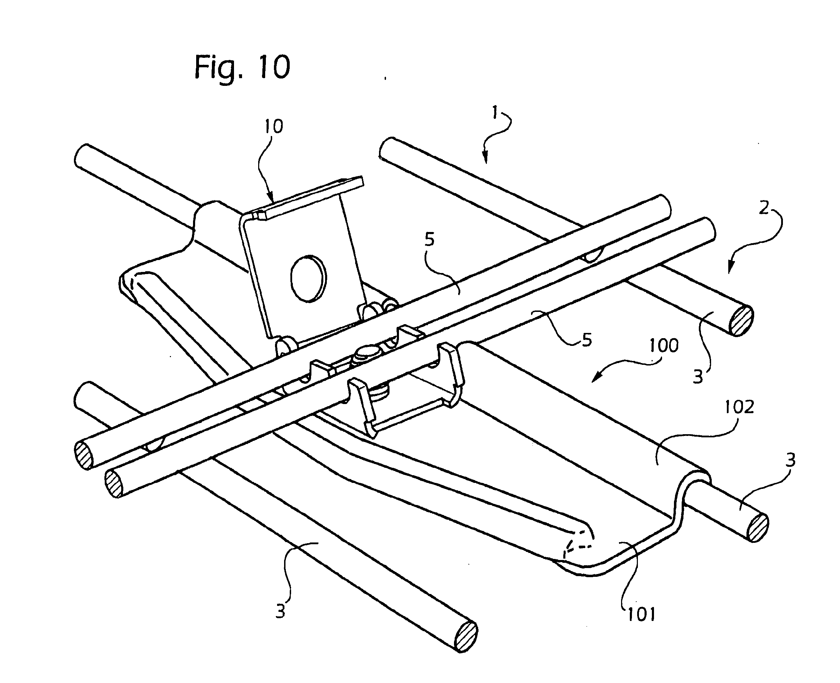

A second embodiment of a connecting device according to the invention is illustrated in Figure 10, where parts and elements identical or functionally equivalent to those illustrated in Figures 8 and 9 have been indicated by the same reference numbers.

With reference to Figure 10, the connecting device 100 comprises basically a plate element 101, in the central portion of which there is fixed one joining clamp 10 of the same type as those described before (for example, that illustrated in Figures 5 and 6). The clamp 10 is arranged to secure the bottom segments 6 or the vertical segments 7 of the end transverse wires 5 of the two mesh tray sections to be connected. The plate element 101 forms, along a longitudinal edge thereof, a pair of channel portions 102 for engaging the end portions of a pair of essentially aligned, longitudinal wires 3 of the two mesh tray sections to be connected. The clamp 10 is fixed to the plate element 101, for example, by welding or screw-fixing, as in the first embodiment described above.

Clearly, a connecting device according to the present invention offers the advantage of providing strong connection and precise alignment between the two tray sections to be connected and enabling, at the same time, simple and quick assembling.

Naturally, the principle of the invention remaining unchanged, embodiments and manufacturing details may vary widely with respect to those described and illustrated purely by way of non-limitative example. This applies in particular to the snap-engagement means for the two elements of the clamp and to the shape of the seats in the clamp for securing the end transverse wires of the two mesh cable tray sections to be connected.

## Claims

1. A joining clamp (10) for a mesh cable tray comprising a series of longitudinal wires (3) and a series of transverse wires (5) connected with each other to form a mesh; the clamp (10) including separate first and second elements (11, 12), with at least one of these forming seats (17; 15a, 15b) for receiving a pair of facing end transverse wires (5) of two adjacent sections (1, 2) of mesh cable tray; **characterised in that** it comprises
articulation means (20, 21; 20a, 20b, 21, 21a, 21b) for articulated connection of the first and second elements (11, 12) in a pre-assembled condition in which these elements are rotatable relative to each other between an open position, in which the pair of facing end transverse wires (5) can be inserted into the respective seats (17; 15a, 15b), and a closed position, in which the wires (5) are securely locked in the seats (17; 15a, 15b); and
snap-engagement means (22, 23; 29; 33, 34) for securing the first and second elements (11, 12) together upon relative rotation thereof from the open position to the closed position.

2. A joining clamp according to Claim 1, **characterised in that** the first and second elements (11, 12) have respective openings (24, 25) which face one another in the closed position so as to enable threaded fixing means to be passed through for securing the two elements (11, 12) together.

3. A joining clamp according to Claim 1, **characterised in that** the said articulation means (20, 21; 20a, 20b, 21, 21a, 21b) are arranged to enable, in the pre-assembled condition, relative rotation of the first and second elements (11, 12) about an axis substantially parallel to the axes of the segments of the end transverse wires (5) to be clamped.

4. A joining clamp according to Claim 1, **characterised in that** the first element (11) includes a central plate portion (16) and a pair of facing side plate portions (19a, 19b) which extend essentially perpendicular to the central portion (16) from opposite edges thereof; and **in that** the second element (12) comprises a central plate portion (30) which is interposed, in the closed position, between the side plate portions (19a, 19b) of the first element (11) for clamping the two end transverse wires (5) to be locked in the seats (17; 15a, 15b).

5. A joining clamp according to Claim 4, **characterised in that** the said articulation means for articulated connection of the first and second elements (11, 12) comprise a slot (20) provided in one (19a) of the facing side plate portions (19a, 19b) of the first element (11) and an extension (21) projecting laterally from the central plate portion (30) of the second element (12) and arranged to be engaged in the slot (20); and **in that** the said snap-engagement means comprise a slot (23) provided in the other (19b) of the facing side plate portions (19a, 19b) of the first element (11) and a tooth (22) projecting laterally from the central plate portion (30) of the second element (12) and arranged to snap-engage in the slot (23) upon relative rotation of the two elements (11, 12) from the open position to the closed position.

6. A joining clamp according to Claim 4, **characterised in that** the facing side plate portions (19a, 19b) of the first element (11) each have a pair of notches (15a, 15b) for receiving the pair of facing end transverse wires (5) to be clamped.

7. A joining clamp according to Claim 6, **characterised in that** the depth of the notches (15a, 15b) provided in the facing side plate portions (19a, 19b) of the first element (11) is less than the diameter of the transverse wires (5) to be clamped, so that the transverse wires (5), when received in the notches (15a, 15b), protrude from the end edges of the side plate portions (19a, 19b) and can be locked against the bottom of the notches (15a, 15b) by the central plate portion (30) of the second element (12) upon relative rotation of the two elements (11, 12) to the closed position.

8. A joining clamp according to Claim 7, **characterised in that** the two notches (15a, 15b) furthest from the articulation means (20a, 20b, 21, 21a, 21b) each have a pair of parallel sides inclined to the perpendicular axis of the central plate portion (16) of the first element (11).

9. A joining clamp according to Claim 6, **characterised in that** the said snap-engagement means comprise
a pair of seats (33) provided in opposite edges of a side plate portion (31) extending essentially transversely from the central plate portion (30) of the second element (12); and
a pair of catch members (34) formed by opposite edges of the facing side plate portions (19a, 19b) of the first element (11), the catch members being shaped as teeth with a ramp profile rising towards the central plate portion (16) for snap-engaging the seats (33) upon relative rotation of the two elements (11, 12) to the closed position.

10. A joining clamp according to Claim 4, **characterised in that** the seats for receiving the two facing end transverse wires (5) of the two mesh cable tray sections (1, 2) to be connected are formed by a pair of channel portions (17) interposed between the central plate portion (16) and the two facing side plate portions (19a, 19b) of the first element (11).

11. A joining clamp according to Claim 4, **characterised in that** each of the seats (17) for receiving the two facing end transverse wires (5) of the two mesh cable tray sections (1, 2) to be connected is defined on the inside by at least one projection (13a, 13b) extending transversely from the central plate portion (16) of the first element (11) and on the outside by the one of the two facing side plate portions (19a, 19b) of the first element (11) adjacent the at least one projection (13a, 13b).

12. A joining clamp according to Claim 11, **characterised in that** the central plate portion (30) of the second element (12) forms at least one projection (14a, 14b) for each seat (17), which extends transversely from the plate portion (30) so that, in the assembled condition, the at least one projection (14a, 14b) of the second element (12) co-operates with the at least one projection (13a, 13b) of the central plate portion (16) of the first element (11) to clamp an end transverse wire (5) against the respective side plate portion (19a, 19b) of the first element (11).

13. A joining clamp according to Claim 11 or Claim 12, **characterised in that** the at least one projection (13a, 13b; 14a, 14b) of the first and second elements (11, 12) is formed by blanking and bending a corresponding edge of the central plate portion (16; 30) of the respective element (11, 12).

14. A joining clamp according to Claim 4, **characterised in that** the said snap-engagement means comprise a ramp-shape projection (28) integrally formed by one (19b) of the facing side plate portions (19a, 19b) of the first element (11), the projection (28) being inclined outwardly of the element (11) and joined to the respective side plate portion (19b) by means of a portion (29) folded to form a step, whereby upon relative rotation of the first and second elements (11, 12) to each other, the side edge of the second element (12) facing the side plate portion (19b) of the first element (11) is forced to slide along the inner surface of the projection (28) until it resiliently snaps past the step portion (29), thus locking the two elements (11, 12) in the assembled condition.

15. A connecting device (100) for a mesh cable tray comprising a series of longitudinal wires (3) and a series of transverse wires (5) connected with each other to form a mesh; **characterised in that** it comprises
a plate element (101) for engaging the end portions of a pair of essentially aligned, longitudinal wires (3) of two adjacent sections (1, 2) of mesh cable tray; and
at least one joining clamp (10) fixed onto the plate element (101) and including
- separate first and second elements (11, 12), with at least one of these forming seats (17; 15a, 15b) for receiving a pair of facing end transverse wires (5) of the two adjacent tray sections (1, 2) to be connected;
- articulation means (20, 21; 20a, 20b, 21, 21a, 21b) for articulated connection of the first and second elements (11, 12) in a pre-assembled condition in which these elements are rotatable relative to each other between an open position, in which the pair of facing end transverse wires (5) can be inserted into the respective seats (17; 15a, 15b), and a closed position, in which the wires (5) are securely locked in the seats (17; 15a, 15b); and
- snap-engagement means (22, 23; 29; 33, 34) for securing the first and second elements (11, 12) together upon relative rotation thereof from the open position to the closed position.

16. A connecting device according to Claim 15, of the type comprising one joining clamp (10), **characterised in that** the plate element (101) is longitudinally elongate and forms a pair of channel portions (102) integral with a longitudinal edge portion of the plate element (101) for engaging the end portions of the two aligned longitudinal wires (3) of the two mesh cable tray sections (1, 2) to be connected.

17. A connecting device according to Claim 15, of the type comprising a pair of joining clamps (10), **characterised in that** the plate element (101) is transversely elongate and forms a central recessed portion (102) for engaging the end portions of the two aligned longitudinal wires (3) of the two mesh cable tray sections (1, 2) to be connected; the two joining clamps (10) being fixed to the plate element (101) on opposite sides with respect to the recessed portion (102).

18. A connecting device according to any of Claims 15 to 17, **characterised in that** the at least one joining clamp (10) is fixed to the plate element (101) by welding or screwing.

## Patentansprüche

1. Verbindungsklemme (10) für eine Gitterkabeltrasse, umfassend eine Anzahl von Längsdrähten (3) und eine Anzahl von Querdrähten (5), welche zum Bilden eines Gitters miteinander verbunden sind; wobei die Klemme (10) ein getrenntes erstes und zweites Element (11, 12) umfasst, wobei wenigstens eines von diesen Elementen Aufnahmen (17; 15a, 15b) zum Aufnehmen eines Paars gegenüber liegender Endquerdrähte (5) zweier benachbarter Abschnitte (1, 2) der Gitterkabeltrasse bildet; **dadurch gekennzeichnet, dass** sie umfasst:
Gelenkmittel (20, 21; 20a, 20b, 21, 21 a, 21 b) für eine Gelenkverbindung des ersten und zweiten Elements (11, 12) in einem vormontierten Zustand, in dem diese Elemente bezüglich einander zwischen einer Offenstellung, in der das Paar gegenüber liegender Endquerdrähte (5) in die jeweiligen Aufnahmen (17; 15a, 15b) eingeführt werden kann, und einer Geschlossenstellung, in der die Drähte (5) fest in den Aufnahmen (17; 15a, 15b) arretiert sind, drehbar sind; und
Schnappeingriffsmittel (22, 23; 29; 33, 34) zum gemeinsamen Befestigen des ersten und zweiten Elements (11, 12) bei deren Drehung bezüglich einander von der Offenstellung zu der Geschlossenstellung.

2. Verbindungsklemme nach Anspruch 1, **dadurch gekennzeichnet, dass** das erste und zweite Element (11, 12) jeweils Öffnungen (24, 25) aufweisen, welche in der Geschlossenstellung gegenüber liegen, um zu ermöglichen, dass Gewindebefestigungsmittel hindurch geführt werden, um die zwei Elemente (11, 12) zusammen zu befestigen.

3. Verbindungsklemme nach Anspruch 1, **dadurch gekennzeichnet, dass** die Gelenkmittel (20, 21; 20a, 20b, 21, 21 a, 21 b) dazu angeordnet sind, in dem vormontierten Zustand eine Drehung des ersten Elements (11) bezüglich des zweiten Elements (12) um eine Achse zu ermöglichen, welche im Wesentlichen parallel zu den Achsen der Segmente der festzuklemmenden Endquerdrähte (5) ist.

4. Verbindungsklemme nach Anspruch 1, **dadurch gekennzeichnet, dass** das erste Element (11) einen zentralen Plattenabschnitt (16) und ein Paar gegenüber liegender Plattenabschnitte (19a, 19b) umfasst, welche sich von gegenüber liegenden Rändern daran im Wesentlichen orthogonal zu dem zentralen Abschnitt (16) erstrecken; und **dadurch**, dass das zweite Element einen zentralen Plattenabschnitt (30) umfasst, welcher in der Geschlossenstellung zwischen den Seitenplattenabschnitten (19a, 19b) des ersten Elements (11) eingeschoben ist, um die beiden Endquerdrähte (5) festzuklemmen, damit diese in den Aufnahmen (17; 15a, 15b) arretiert sind.

5. Verbindungsklemme nach Anspruch 4, **dadurch gekennzeichnet, dass** die Gelenkmittel für die Gelenkverbindung des ersten und zweiten Elements (11, 12) einen Schlitz (20) umfassen, der in einem (19a) der gegenüber liegenden Seitenplattenabschnitte (19a, 19b) des ersten Elements (11) vorgesehen ist, und eine Verlängerung (21) umfassen, die lateral von dem zentralen Plattenabschnitt (30) des zweiten Elements (12) übersteht und dazu angeordnet ist, in dem Schlitz (20) aufgenommen zu werden; und **dadurch**, dass die Schnappeingriffsmittel einen in dem anderen (19b) gegenüber liegenden Seitenplattenabschnitt (19a, 19b) des ersten Elements (11) vorgesehenen Schlitz (23) umfassen und einen Zahn (22), der lateral von dem zentralen Plattenabschnitt (30) des zweiten Elements (12) übersteht und dazu angeordnet ist, bei der Drehung der zwei Elemente (11, 12) bezüglich einander von der Offenstellung zu der Geschlossenstellung in den Schlitz (23) einzuschnappen.

6. Verbindungsklemme nach Anspruch 4, **dadurch gekennzeichnet, dass** die gegenüber liegenden Seitenplattenabschnitte (19a, 19b) des ersten Elements (11) jeweils ein Paar Aussparungen (15a, 15b) zum Aufnehmen des Paars gegenüber liegender, festzuklemmender Endquerdrähte (5) umfassen.

7. Verbindungsklemme nach Anspruch 6, **dadurch gekennzeichnet, dass** die Tiefe der in den gegenüber liegenden Seitenplattenabschnitten (19a, 19b) des ersten Elements (11) vorgesehenen Aussparungen (15a, 15b) geringer ist als der Durchmesser der festzuklemmenden Querdrähte (5), so dass die Querdrähte (5), wenn sie in den Aussparungen (15a, 15b) aufgenommen sind, von den Endrändern der Seitenplattenabschnitte (19a, 19b) überstehen und bei der Drehung der zwei Elemente (11, 12) bezüglich einander zu der Geschlossenstellung gegen den Boden der Aussparungen (15a, 15b) durch den zentralen Plattenabschnitt (30) des zweiten Elements (12) arretiert werden können.

8. Verbindungsklemme nach Anspruch 7, **dadurch gekennzeichnet, dass** die von den Gelenkmitteln (20a, 20b, 21, 21 a, 21 b) am weitesten entfernten zwei Aussparungen (15a, 15b) jeweils ein Paar paralleler Seiten aufweisen, die zu der Orthogonalachse des zentralen Plattenabschnitts (16) des ersten Elements (11) hin geneigt sind.

9. Verbindungsklemme nach Anspruch 6, **dadurch gekennzeichnet, dass** die Schnappeingriffsmittel umfassen:
ein Paar Aufnahmen (33), die an gegenüber liegenden Rändern eines Seitenplattenabschnitts (31) vorgesehen sind, welcher sich im Wesentlichen quer zu dem zentralen Plattenabschnitt (30) des zweiten Elements (12) erstreckt; und
ein Paar Fangelemente (34), die durch gegenüber liegende Ränder der gegenüber liegenden Seitenplattenabschnitte (19a, 19b) des ersten Elements (11) gebildet sind, wobei die Fangelemente als Zähne gebildet sind, mit einem Rarnpenprofil, welches zu dem zentralen Plattenabschnitt (16) hin für den Schnappeingriff der Aufnahmen (33) bei der Drehung der zwei Elemente (11, 12) bezüglich einander zu der Geschlossenstellung ansteigt.

10. Verbindungsklemme nach Anspruch 4, **dadurch gekennzeichnet, dass** die Aufnahmen zum Aufnehmen der zwei gegenüber liegenden Endquerdrähte (5) der zwei zu verbindenden Gitterkabeltrassenabschnitte (1, 2) durch ein Paar Kanalabschnitte (17) gebildet sind, welche zwischen dem zentralen Plattenabschnitt (16) und den zwei gegenüber liegenden Plattenabschnitten (19a, 19b) des ersten Elements (11) eingeschoben sind.

11. Verbindungsklemme nach Anspruch 4, **dadurch gekennzeichnet, dass** jede der Aufnahmen (17) zum Aufnehmen der zwei gegenüber liegenden Endquerdrähte (5) der zwei zu verbindenden Gitterkabeltrassenabschnitte (1, 2) an der Innenseite durch wenigstens einen Überstand (13a, 13b) definiert ist, der sich quer von dem zentralen Plattenabschnitt (16) des ersten Elements (11) erstreckt, und an der Außenseite durch einen der zwei gegenüber liegenden Seitenplattenabschnitte (19a, 19b) des ersten Elements (11) neben dem wenigstens einen Überstand (13a, 13b) definiert ist.

12. Verbindungsklemme nach Anspruch 11, **dadurch gekennzeichnet, dass** der zentrale Plattenabschnitt (30) des zweiten Elements (12) wenigstens einen Überstand (14a, 14b) für jede Aufnahme (17) bildet, welcher sich quer von dem Plattenabschnitt (30) erstreckt, sodass im zusammen gefügten Zustand der wenigstens eine Überstand (14a, 14b) des zweiten Elements (12) mit dem wenigstens einen Überstand (13a, 13b) des zentralen Plattenabschnitts (16) des ersten Elements (11) zusammen wirkt, um einen Endquerdraht (5) gegen den jeweiligen Seitenplattenabschnitt (19a, 19b) des ersten Elements (11) festzuklemmen.

13. Verbindungsklemme nach Anspruch 11 oder Anspruch 12, **dadurch gekennzeichnet, dass** der wenigstens eine Überstand (13a, 13b; 14a, 14b) des ersten und zweiten Elements (11, 12) durch Ausstanzen und Biegen eines entsprechenden Rands des zentralen Plattenabschnitts (16; 30) des jeweiligen Elements (11, 12) gebildet ist.

14. Verbindungsklemme nach Anspruch 4, **dadurch gekennzeichnet, dass** das Schnappeingriffsmittel einen rampenförmigen Überstand (28) umfasst, der integral durch einen (19b) der gegenüber liegenden Seitenplattenabschnitte (19a, 19b) des ersten Elements (11) gebildet ist, wobei der Überstand (28) von dem Element (11) nach außen geneigt ist und mit dem zugehörigen Seitenplattenabschnitt (19b) mittels eines Abschnitts (29) verbunden ist, der zum Bilden einer Stufe gefaltet ist, wodurch bei der Drehung des ersten Elements (11) bezüglich des zweiten Elements (12) der Seitenrand des zweiten Elements (12) gegenüber des Seitenplattenabschnitts (19b) des ersten Elements (11) dazu gezwungen wird, an der Innenfläche des Überstands (28) entlang zu gleiten bis er elastisch hinter dem Stufenabschnitt (29) einschnappt, wodurch die zwei Elemente (11, 12) in dem zusammen gefügten Zustand arretiert werden.

15. Verbindungsvorrichtung (100) für eine Gitterkabeltrasse, umfassend eine Anzahl von Längsdrähten (3) und eine Anzahl von Querdrähten (5), welche miteinander verbunden sind, um ein Gitter zu bilden; **dadurch gekennzeichnet, dass** sie umfasst:
ein Plattenelement (101) zum Eingreifen der Endabschnitte eines Paars im Wesentlichen ausgerichteter Längsdrähte (3) zweier benachbarter Abschnitte (1, 2) einer Gitterkabeltrasse; und
wenigstens eine an dem Plattenelement (101) befestigte Verbindungsklemme (10), umfassend
- ein getrenntes erstes und zweites Element (11, 12), wobei wenigstens eines von diesen Aufnahmen (17; 15a, 15b) zum Aufnehmen eines Paars gegenüber liegender Endquerdrähte (5) der zwei benachbarten Trassenabschnitte (1, 2) bildet;
- Gelenkmittel (20, 21; 20a, 20b, 21, 21 a, 21 b) für eine Gelenkverbindung des ersten und zweiten Elements (11, 12) in einem vormontierten Zustand, in dem diese Elemente bezüglich einander zwischen einer Offenstellung, in der das Paar gegenüber liegender Endquerdrähte (5) in die jeweiligen Aufnahmen (17; 15a, 15b) eingeführt werden kann, und einer Geschlossenstellung, in der die Drähte (5) fest in den Aufnahmen (17; 15a, 15b) arretiert sind, drehbar sind; und
Schnappeingriffsmittel (22, 23; 29; 33, 34) zum gemeinsamen Befestigen des ersten und zweiten Elements (11, 12) bei deren Drehung bezüglich einander von der Offenstellung zu der Geschlossenstellung.

16. Verbindungsvorrichtung nach Anspruch 15 des Typs, der eine Verbindungsklemme (10) umfasst, **dadurch gekennzeichnet, dass** das Plattenelement (101) in Längsrichtung länglich ist und integral mit einem Längsrandabschnitt des Plattenelements (101) ein Paar Kanalabschnitte (102) bildet, um die Endabschnitte der zwei ausgerichteten Längsdrähte (3) der zwei zu verbindenden Gitterkabeltrassenabschnitte (1, 2) einzugreifen.

17. Verbindungsvorrichtung nach Anspruch 15 des Typs, der ein Paar Verbindungsklemmen (10) umfasst, **dadurch gekennzeichnet, dass** das Plattenelement (101) in Querrichtung länglich ist und einen zentralen Aussparungsabschnitt (102) bildet, um die Endabschnitte der zwei ausgerichteten Längsdrähte (3) der zwei zu verbindenden Gitterkabeltrassenabschnitte (1, 2) einzugreifen; wobei die beiden Verbindungsklemmen (10) an dem Plattenelement (101) an bezüglich des Aussparungsabschnitts (102) gegenüber liegenden Seiten befestigt sind.

18. Verbindungsvorrichtung nach einem der Ansprüche 15 bis 17, **dadurch gekennzeichnet, dass** die wenigstens eine Verbindungsklemme (10) an dem Plattenelement (101) durch Schweißen oder Schrauben befestigt ist.

## Revendications

1. Pince de jonction (10) destinée à un chemin de câbles en maillage comprenant une série de fils longitudinaux (3) et une série de fils transversaux (5) reliés les uns aux autres pour former un maillage, la pince (10) comprenant des premier et deuxième éléments séparés (11, 12), au moins un de ceux-ci formant des surfaces d'appui (17 ; 15a, 15b) destinées à recevoir une paire de fils transversaux d'extrémité en vis-à-vis (5) de deux sections adjacentes (1, 2) du chemin de câbles en maillage, **caractérisée en ce qu'**elle comprend
un moyen d'articulation (20, 21 ; 20a, 20b, 21, 21a, 21b) destiné à une liaison articulée des premier et deuxième éléments (11, 12) dans un état préassemblé dans lequel ces éléments peuvent tourner l'un par rapport à l'autre entre une position ouverte, dans laquelle la paire de fils transversaux d'extrémité en vis-à-vis (5) peut être insérée dans les surfaces d'appui respectives (17 ; 15a, 15b), et une position fermée, dans laquelle les fils (5) sont bloqués fermement dans les surfaces d'appui (17 ; 15a, 15b), et
un moyen d'engagement par encliquetage (22, 23 ; 29 ; 33, 34) destiné à fixer les premier et deuxième éléments (11, 12) ensemble lors de leur rotation relative de la position ouverte à la position fermée.

2. Pince de jonction selon la revendication 1, **caractérisée en ce que** les premier et deuxième éléments (11, 12) comportent des ouvertures respectives (24, 25) qui se font face l'une l'autre dans la position fermée de façon à permettre à un moyen de fixation fileté de les traverser pour fixer les deux éléments (11, 12) ensemble.

3. Pince de jonction selon la revendication 1, **caractérisée en ce que** ledit moyen d'articulation (20, 21 ; 20a, 20b, 21, 21a, 21b) est agencé pour permettre, dans l'état préassemblé, une rotation relative des premier et deuxième éléments (11, 12) autour d'un axe sensiblement parallèle aux axes des segments des fils transversaux d'extrémité (5) devant être serrés.

4. Pince de jonction selon la revendication 1, **caractérisée en ce que** le premier élément (11) comprend une partie de plaque centrale (16) et une paire de parties de plaques latérales en vis-à-vis (19a, 19b) qui s'étendent essentiellement perpendiculairement à la partie centrale (16) depuis les bords opposés de celle-ci, et **en ce que** le deuxième élément (12) comprend une partie de plaque centrale (30) qui est intercalée, dans la position fermée, entre les parties de plaques latérales (19a, 19b) du premier élément (11) pour serrer les deux fils transversaux d'extrémité (5) devant être bloqués dans les surfaces d'appui (17 ; 15a, 15b).

5. Pince de jonction selon la revendication 4, **caractérisée en ce que** ledit moyen d'articulation pour une liaison articulée des premier et deuxième éléments (11, 12) comprend une fente (20) ménagée dans une première (19a) des parties de plaques latérales en vis-à-vis (19a, 19b) du premier élément (11) et une extension (21) dépassant latéralement de la partie de plaque centrale (30) du deuxième élément (12) et agencée pour être engagée dans la fente (20), et **en ce que** ledit moyen d'engagement par encliquetage comprend une fente (23) ménagée dans l'autre (19b) des parties de plaques latérales en vis-à-vis (19a, 19b) du premier élément (11) et une dent (22) dépassant latéralement de la partie de plaque centrale (30) du deuxième élément (12) et agencée pour s'engager par encliquetage dans la fente (23) lors d'une rotation relative des deux éléments (11, 12) de la position ouverte à la position fermée.

6. Pince de jonction selon la revendication 4, **caractérisée en ce que** les parties de plaques latérales en vis-à-vis (19a, 19b) du premier élément (11) présentent chacune une paire d'encoches (15a, 15b) destinées à recevoir la paire de fils transversaux d'extrémité en vis-à-vis (5) devant être serrés.

7. Pince de jonction selon la revendication 6, **caractérisée en ce que** la profondeur des encoches (15a, 15b) ménagées dans les parties de plaques latérales en vis-à-vis (19a, 19b) du premier élément (11) est inférieure au diamètre des fils transversaux (5) devant être serrés, de sorte que les fils transversaux (5), lorsqu'ils sont reçus dans les encoches (15a, 15b), dépassent des bords d'extrémité des parties de plaques latérales (19a, 19b) et peuvent être bloqués contre le fond des encoches (15a, 15b) par la partie de plaque centrale (30) du deuxième élément (12) lors d'une rotation relative des deux éléments (11, 12) vers la position fermée.

8. Pince de jonction selon la revendication 7, **caractérisée en ce que** les deux encoches (15a, 15b) les plus éloignées du moyen d'articulation (20a, 20b, 21, 21a, 21b) présentent chacune une paire de côtés parallèles inclinés vers l'axe perpendiculaire de la partie de plaque centrale (16) du premier élément (11).

9. Pince de jonction selon la revendication 6, **caractérisée en ce que** ledit moyen d'engagement par encliquetage comprend
une paire de surfaces d'appui (33) prévues dans les bords opposés d'une partie de plaque latérale (31) s'étendant essentiellement transversalement par rapport à la partie de plaque centrale (30) du deuxième élément (12), et
une paire d'éléments de prise (34) formés par les bords opposés des parties de plaques latérales en vis-à-vis (19a, 19b) du premier élément (11), les éléments de prise étant en forme de dents avec un profil incliné s'élevant vers la partie de plaque centrale (16) pour un engagement par encliquetage des surfaces d'appui (33) lors d'une rotation relative des deux éléments (11, 12) vers la position fermée.

10. Pince de jonction selon la revendication 4, **caractérisée en ce que** les surfaces d'appui destinées à recevoir les deux fils transversaux d'extrémité en vis-à-vis (5) des deux sections de chemin de câbles en maillage (1, 2) devant être liées, sont formées par une paire de parties de canaux (17) interposées entre la partie de plaque centrale (16) et les deux parties de plaques latérales en vis-à-vis (19a, 19b) du premier élément (11).

11. Pince de jonction selon la revendication 4, **caractérisée en ce que** chacune des surfaces d'appui (17) destinées à recevoir les deux fils transversaux d'extrémité en vis-à-vis (5) des deux sections de chemin de câbles en maillage (1, 2) devant être liées, est définie sur l'intérieur par au moins une protubérance (13a, 13b) s'étendant transversalement par rapport à la partie de plaque centrale (16) du premier élément (11) et sur l'extérieur par l'une des deux parties de plaques latérales en vis-à-vis (19a, 19b) du premier élément (11) adjacente à au moins une protubérance (13a, 13b).

12. Pince de jonction selon la revendication 11, **caractérisée en ce que** la partie de plaque centrale (30) du deuxième élément (12) forme au moins une protubérance (14a, 14b) pour chaque surface d'appui (17), qui s'étend transversalement par rapport à la partie de plaque (30) de telle sorte que, dans l'état assemblé, la au moins une protubérance (14a, 14b) du deuxième élément (12) coopère avec la au moins une protubérance (13a, 13b) de la partie de plaque centrale (16) du premier élément (11) pour serrer un fil transversal d'extrémité (5) contre la partie de plaque latérale respective (19a, 19b) du premier élément (11).

13. Pince de jonction selon la revendication 11 ou la revendication 12, **caractérisée en ce que** la au moins une protubérance (13a, 13b ; 14a, 14b) des premier et deuxième éléments (11, 12) est formée par l'estampage et le pliage d'un bord correspondant de la partie de plaque centrale (16 ; 30) de l'élément respectif (11, 12).

14. Pince de jonction selon la revendication 4, **caractérisée en ce que** ledit moyen d'engagement par encliquetage comprend une protubérance en forme de rampe (28) formée d'un seul bloc par une (19b) des parties de plaques latérales en vis-à-vis (19a, 19b) du premier élément (11), la protubérance (28) étant inclinée vers l'extérieur de l'élément (11) et reliée à la partie de plaque latérale respective (19b) au moyen d'une partie (29) pliée pour former une marche, grâce à quoi lors de la rotation relative des premier et deuxième éléments (11, 12) l'un par rapport à l'autre, le bord latéral du deuxième élément (12) opposé à la plaque latérale (19b) du premier élément (11) est forcé à coulisser le long de la surface intérieure de la protubérance (28) jusqu'à ce qu'il s'encliquette de façon élastique au-delà de la partie de marche (29), en verrouillant ainsi les deux éléments (11, 12) dans l'état assemblé.

15. Dispositif de liaison (100) destiné à un chemin de câbles en maillage comprenant une série de fils longitudinaux (3) et une série de fils transversaux (5) reliés les uns aux autres pour former un maillage, **caractérisé en ce qu'**il comprend
un élément de plaque (101) destiné à recevoir les parties d'extrémité d'une paire de fils longitudinaux essentiellement alignés (3) des deux sections adjacentes (1, 2) du chemin de câbles en maillage, et
au moins une pince de jonction (10) fixée sur l'élément de plaque (101) et comprenant
- des premier et deuxième éléments séparés (11, 12), au moins un de ceux-ci formant des surfaces d'appui (17 ; 15a, 15b) destinées à recevoir une paire de fils transversaux d'extrémité en vis-à-vis (5) des deux sections de chemin adjacentes (1, 2) devant êtres reliées,
- un moyen d'articulation (20, 21 ; 20a, 20b, 21, 21a, 21b) pour une liaison articulée des premier et deuxième éléments (11, 12) dans un état préassemblé dans lequel ces éléments peuvent tourner l'un par rapport à l'autre entre une position ouverte, dans laquelle la paire de fils transversaux d'extrémité en vis-à-vis (5) peut être insérée dans les surfaces d'appui respectives (17 ; 15a, 15b), et une position fermée, dans laquelle les fils (5) sont bloqués fermement dans les surfaces d'appui (17 ; 15a, 15b), et
- un moyen d'engagement par encliquetage (22, 23 ; 29 ; 33, 34) destiné à fixer les premier et deuxième éléments (11, 12) ensemble lors d'une rotation relative de ceux-ci depuis la position ouverte à la position fermée.

16. Dispositif de liaison selon la revendication 15, du type comprenant une pince de jonction (10), **caractérisé en ce que** l'élément de plaque (101) est allongé longitudinalement et forme une paire de parties de canaux (102) solidaires d'une partie de bord longitudinal de l'élément de plaque (101) pour engager les parties d'extrémité des deux fils longitudinaux alignés (3) des deux sections de chemin de câbles en maillage (1, 2) devant être reliées.

17. Dispositif de liaison selon la revendication 15, du type comprenant une paire de pinces de jonction (10), **caractérisé en ce que** l'élément de plaque (101) est allongé transversalement et forme une partie évidée centrale (102) destinée à recevoir les parties d'extrémité des deux fils longitudinaux alignés (3) des deux sections de chemin de câbles en maillage (1, 2) devant être reliées, les deux pinces de jonction (10) étant fixées à l'élément de plaque (101) sur les côtés opposés par rapport à la partie évidée (102).

18. Dispositif de liaison selon l'une quelconque des revendications 15 à 17, **caractérisé en ce que** la au moins une pince de jonction (10) est fixée à l'élément de plaque (101) par soudage ou vissage.
